# FASCICULE DE BREVET EUROPEEN

(11) **EP 4 062 142 B1**
(45) Date de publication et mention de la délivrance du brevet: **29.05.2024**
(21) Numéro de dépôt: 20803887.7
(22) Date de dépôt: 16.11.2020
(51) Int. Cl.: G01M 11/08, G01M 5/00, G01N 21/90

(54) **DISPOSITIF DE CONTROLE POUR RECIPIENT EN MATIERE PLASTIQUE**
VORRICHTUNG ZUR ÜBERWACHUNG VON KUNSTSTOFFBEHÄLTERN
DEVICE FOR MONITORING PLASTIC CONTAINERS

(30) Priorité: 19.11.2019 FR 1912884
(43) Date de publication de la demande: 28.09.2022
(73) Titulaire: Sidel Participations, 76930 Octeville-sur-Mer (FR)
(72) Inventeur: PORT, Hélène, 76930 OCTEVILLE-SUR-MER (FR)
(74) Mandataire: Sidel Group
(86) Numéro de dépôt international: PCT/EP2020/082267
(87) Numéro de publication internationale: WO 2021/099268

(56) Documents cités:
- JP-A- 2001 201 457
- US-A1- 2003 214 649
- US-A1- 2009 178 469

## Description

Le domaine de l'invention est celui de la conception et de la fabrication de récipients en matière plastique, tels que des récipients en polyéthylène téréphtalate (P.E.T.).

Plus précisément, l'invention concerne un procédé de contrôle mécanique par échantillonnage des récipients formés.

Les récipients en matière plastique sont obtenus à partir de préformes qui sont déformées par soufflage ou étirage soufflage pour obtenir leur forme définitive.

Plus particulièrement, les préformes sont chauffées jusqu'à ce que leur matière constitutive atteigne une température de transition vitreuse dans laquelle la matière plastique est suffisamment malléable pour être étirée sans se déchirer.

Les récipients formés sont ensuite transférés vers des unités de traitement dans lesquelles ils sont par exemple remplis, bouchés et étiquetés.

Selon les stades de traitement, les transferts entre les différentes unités de traitement sont réalisés par des moyens de convoyage dans lesquels les récipients sont soit maintenus par leur col, auquel cas ils sont en suspension, soit convoyés par des tapis ou chaines de convoyage, auquel cas ils reposent sur leur fond.

Lors de la fabrication des récipients en matière plastique, la matière plastique présente un relâchement de contraintes internes qui peut être à l'origine de l'apparition de zones de faible résistance mécanique. Ces zones de faible résistance mécanique sont généralement localisées en des secteurs du récipient dans lesquels la matière plastique n'a pas été ou a été seulement peu bi-orientée, comme la zone amorphe du fond comprenant et entourant le point d'injection.

La présence de zones de faiblesse est au détriment de la bonne tenue du récipient qui peut se trouver endommagé à l'emplacement de ces zones lors de manipulations. Ainsi, par exemple, les fonds des récipients peuvent se trouver endommagés à l'emplacement des zones de faiblesse de leurs fonds notamment lorsque les récipients sont transportés en subissant des frottements provoqués par des glissements sur des lignes de convoyage entre deux postes de traitement.

Dans l'art antérieur, les lignes de convoyage sont tapissées de lubrifiant afin de limiter le frottement des bouteilles sur les lignes de convoyage et ainsi réduire la détérioration résultant de tels frottements.

Cependant, certains lubrifiants peuvent réagir avec le matériau plastique du récipient (tel que le P.E.T.), ce qui peut les détériorer au niveau des zones de faiblesse qui seraient présentes au fond, voire en créer.

Plus particulièrement, la réaction du matériau plastique avec les lubrifiants peut générer des attaques chimiques qui engendrent des zones de faiblesse dans les zones amorphes du fond du récipient.

Ces zones de faiblesse peuvent également être liées à la formulation de la matière plastique, aux additifs ajoutés aux lubrifiants ou gaz de soufflage, au procédé d'injection utilisé pour la réalisation des préformes ou encore aux conditions de stockage des récipients et des préformes.

Par ailleurs, les conditions climatiques dans lesquelles sont fabriqués les récipients peuvent également engendrer des zones de faiblesse, c'est notamment le cas pour un couple température élevée et forte hygrométrie, comme rencontré dans les pays tropicaux, ce couple étant particulièrement agressif pour les récipients en P.E.T. lorsqu'ils sont soumis à de fortes pressions internes, comme les récipients remplis de boissons carbonatées.

En effet, dans le cas des récipients destinés à contenir des boissons carbonatées, c'est-à-dire des boissons gazeuses, les récipients, une fois bouchés peuvent être soumis à une pression interne de l'ordre de 4 à 6 bars.

La présence de zones peu ou pas bi-orientées, donc plus fragiles, peut alors provoquer un risque de fissuration des récipients engendrant des fuites et, dans le pire des cas, leur éclatement.

Cela est particulièrement vérifié lorsque les récipients, remplis et bouchés sont stockés et palettisés, la destruction d'un récipient engendrant généralement la destruction de la palette complète.

Dans certains cas moins extrêmes, seules des fissurations peu profondes peuvent ap-paraitre dans le récipient.

Néanmoins, durant leur vie, c'est-à-dire depuis leur stockage avant mise dans le commerce jusqu'à leur recyclage, les récipients sont soumis à de nombreuses sollicitations telles que par exemple des vibrations, du frottement, des efforts liés au stockage ou encore les conditions de température et d'hygrométrie.

Toutes ces sollicitations fragilisent encore plus le récipient qui peut, à terme, se fissurer ou exploser, notamment s'il contient un produit sous pression comme une boisson carbonatée.

En outre, pour anticiper les risques d'explosion des récipients, des méthodes de test ont été développées.

Une méthode classiquement répandue met en oeuvre un dispositif de contrôle comprenant :
- un récipient destiné à recevoir une solution liquide contenant de la soude ;
- des moyens de mise sous pression d'un récipient.

Dans cette méthode, le récipient est mis sous pression et au moins son fond est plongé dans la solution liquide.

La soude a pour effet de simuler de façon accélérée les agressions sur le récipient, notamment les attaques chimiques, les frottements et les efforts subis par le récipient.

Par conséquent, la soude forme un révélateur rapide de la présence de contraintes dans les récipients.

Avec la pression présente dans le récipient, le fait de plonger le fond du récipient dans la soude a pour but de provoquer une fissuration de ce dernier, voire une explosion, notamment dans le cas de présence d'amorces de fissures au sein de la matière.

Lorsque le récipient est fissuré ou explosé, il est analysé pour déterminer la localisation des fissures et/ou ruptures.

Ainsi, pour un type de récipient donné, cette méthode permet de déterminer les parties du récipient qui peuvent se rompre sous l'effet de la pression.

Dans les faits, cette méthode associe à une fissure une valeur de temps avant que sa présence n'ait été détectée, notamment lorsque ladite fissure est assez importante pour générer une chute de pression à l'intérieur du récipient ou son explosion.

Cette méthode traduit donc un niveau des contraintes et une valeur de résistance en minutes, mais ne permet pas de corréler l'initiation des fissures avec le moment de l'explosion. Les résultats obtenus à l'aide de cette méthode sont donc disparates.

Un correctif sur les formes ou les épaisseurs du récipient peut être apporté pour corriger la tenue mécanique des récipients et les rendre plus résistants.

Un correctif peut également être appliqué à la matière plastique choisie, au procédé d'injection des préformes, aux conditions de production des récipients et/ou au stockage des préformes et des récipients.

Si une telle méthode présente l'intérêt d'être simple, elle ne permet pas en revanche d'analyser en détail l'origine des fissurations et l'instant auquel elles apparaissent.

En effet, il est important de pouvoir déterminer à partir de quelles sollicitations apparaissent les fissures dans le récipient, et comment elles évoluent dans le temps, afin de déterminer si un récipient, malgré la présence de fissures, peut être apte à être mis dans le commerce. US2009/178469 divulgue un sytème de test d'étanchéité mettant un objet testé sous pression.

L'invention a notamment pour objectif de pallier les inconvénients de l'art antérieur.

Plus précisément, l'invention a pour objectif de proposer un dispositif de contrôle de récipients en matière plastique et un procédé associé qui permettent de déterminer avec précision l'origine des fissurations et leur propagation, et/ou les explosions dans un récipient.

L'invention a également pour objectif de fournir de tels dispositif et procédé qui permettent un suivi en temps réel de l'apparition des fissures et/ou des explosions.

L'invention a en outre pour objectif de fournir de tels dispositif et procédé qui soient simples de mise en oeuvre.

Ces objectifs, ainsi que d'autres qui apparaîtront par la suite, sont atteints grâce à l'invention qui a pour objet un dispositif de contrôle de récipients en matière plastique comprenant :
- un réceptacle destiné à recevoir une solution liquide contenant de la soude, dans lequel peut être au moins partiellement immergé un récipient ;
- des moyens de mise sous pression du récipient,
caractérisé en ce que le réceptacle présente un fond transparent, et en ce que le dispositif de contrôle comprend des moyens d'acquisition d'images, ces moyens d'acquisition étant positionnés sous le réceptacle et enregistrant une succession d'images du récipient lors de sa mise sous pression.

La présence des moyens d'acquisition d'image permet de suivre de manière instantanée, ou quasiment, l'apparition de fissures ou d'explosions dans le récipient. Ainsi, en analysant les images issues des moyens d'acquisition d'images, un technicien peut déterminer à quel instant et à quel endroit du récipient apparaissent les fissures et/ ou explosions. Cela permet notamment de comprendre le mécanisme de propagation des fissures dans le récipient et de pouvoir apporter, le cas échéant, des modifications de caractéristiques au récipient.

Avantageusement, le dispositif comprend des moyens de maintien en position d'un récipient dans le réceptacle.

Les moyens de maintien en position du récipient dans le réceptacle permettent de maintenir dans une position prédéterminée le récipient durant son contrôle. Un récipient mal positionné ne permet pas de comprendre et/ou de détecter l'apparition de fissures par exemple.

En outre, un récipient pressurisé avec de l'air présente une masse volumique inférieure à la solution. Il a donc tendance à flotter à la surface de la solution contenue dans le réceptacle et il est alors nécessaire de le maintenir en position pour que les moyens d'acquisition d'image puissent acquérir des images exploitables du fond du récipient durant le contrôle.

Préférentiellement, le fond transparent du réceptacle se présente sous la forme d'une lentille.

Une lentille permet en effet de grossir le fond du récipient de sorte à mettre en évidence l'apparition de fissures et/ou les explosions du fond du récipient.

Selon un mode de réalisation avantageux, le dispositif comprend un bâti et des moyens de fixation amovibles du réceptacle sur le bâti.

Une telle configuration offre une modularité complète du dispositif pour permettre le contrôle de récipients de différentes tailles et de différentes formes.

Dans ce cas, le réceptacle comprend avantageusement :
- un socle fixé de manière amovible au bâti via les moyens de fixation amovible, le socle portant des premiers organes de fixation ;
- une paroi périphérique fixée de manière amovible sur le socle, la paroi périphérique portant des deuxièmes organes de fixation coopérant avec les premiers organes de fixation ;
- un disque transparent formant le fond du réceptacle, monté de manière amovible entre le socle et la paroi périphérique.

Ces différents éléments permettent d'assurer la modularité du réceptacle mais également d'en faciliter son nettoyage.

Préférentiellement, le dispositif de contrôle comprend une source lumineuse disposée au-dessus du réceptacle et éclairant en direction des moyens d'acquisition d'images.

La présence de la lumière permet de mieux mettre en évidence, pour les moyens d'acquisition d'images, l'apparition des fissures dans le fond du récipient, ainsi que leur propagation.

Selon un mode de réalisation préféré, la source lumineuse émet une lumière blanche à une température comprise entre 3000° Kelvin et 4000° Kelvin.

Cette température permet de créer un éclairage convenable pour rendre le récipient visible sans pour autant créer un effet aveuglant.

Avantageusement, le dispositif comprend en outre au moins un écran polariseur intercalé entre la source lumineuse et les moyens d'acquisition d'images.

L'écran polariseur permet de découper le flux lumineux émis par la source lumineuse de sorte à canaliser les rayons lumineux pour permettre le bon éclairage du récipient.

Préférentiellement, le dispositif comprend deux écrans polariseurs, intercalés entre la source lumineuse et les moyens d'acquisition d'images, chacun de part et d'autre du réceptacle.

Ainsi, les rayons lumineux captés par les moyens d'acquisition permettent d'obtenir des images précises du fond du récipient, facilitant alors l'exploitation des résultats du contrôle des récipients.

Selon un mode de réalisation avantageux, les moyens d'acquisition d'images comprennent une caméra de type à haute vitesse.

Une telle caméra permet de suivre l'évolution et la propagation des fissurations ou des explosions du fond du récipient de manière précise pour l'opérateur. Ainsi, contrairement à une caméra de type conventionnel, la caméra de type haute vitesse permet d'obtenir des défilements image par image à intervalles courts du fond du récipient lors de son contrôle.

Préférentiellement, le dispositif comprend une unité de traitement informatique paramétrée pour exécuter un traitement des images provenant des moyens d'acquisition d'images.

L'unité informatique permet, outre le traitement direct des images acquises, de pouvoir faire un travail d'analyse du contrôle, postérieurement au contrôle.

L'invention concerne également un procédé de contrôle d'un récipient en matière plastique comprenant les étapes consistant à :
- remplir un réceptacle d'une solution contenant de la soude, le réceptacle présentant un fond transparent ;
- immerger au moins partiellement un récipient à contrôler dans ladite solution ;
- pressuriser le récipient ;
caractérisé en ce que le procédé comprend, simultanément à la pressurisation du récipient, et pendant toute la durée du contrôle, une étape d'acquisition d'images au moins d'un fond du récipient.

Grâce à ce procédé, il est possible de détecter une dégradation du fond d'un récipient en cours de contrôle, comme une fissuration ou une explosion de celui-ci.

De préférence, ladite solution comprend un pourcentage de soude compris entre 0.15% et 0.25% en volume.

Un tel pourcentage de soude permet de simuler des agressions du fond du récipient de manière réaliste, tout en assurant l'acquisition d'images par les moyens d'acquisition.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés parmi lesquels :
[fig.1] est une vue schématique, en perspective, d'un dispositif de contrôle de récipients en matière plastique, selon l'invention ;
[fig.2] est une vue schématique de face d'une partie d'un dispositif de contrôle de récipients selon l'invention ;
[fig.3] est une vue en perspective éclatée d'un réceptacle du dispositif de contrôle de récipients selon l'invention ;
[fig.4] est une représentation schématique du fonctionnement du dispositif de contrôle de récipients selon l'invention.

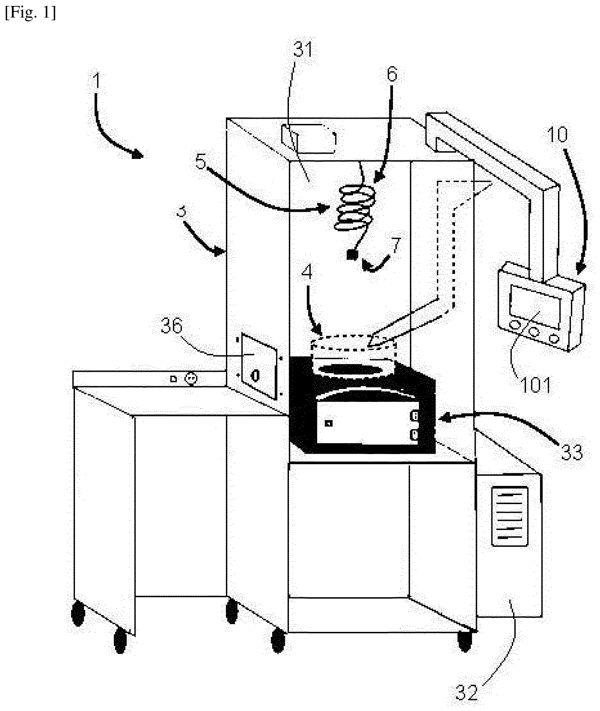

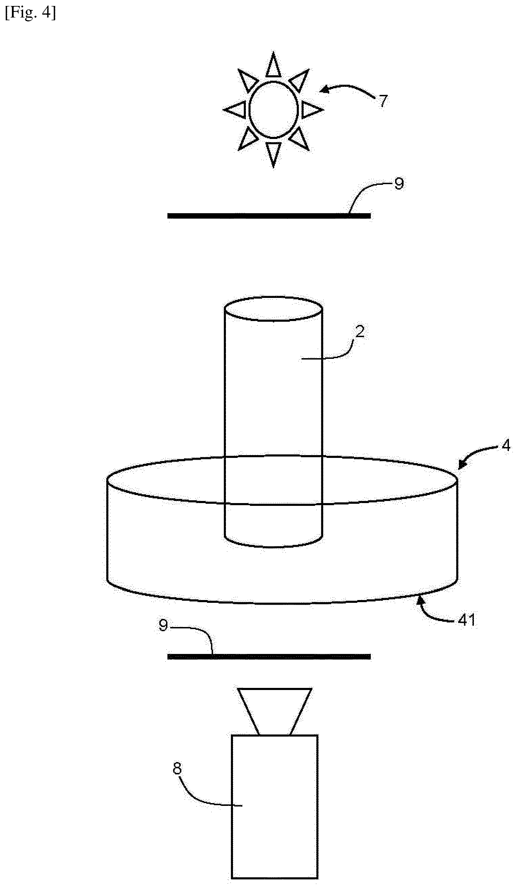

La figure 1 illustre un dispositif 1 de contrôle selon l'invention, de récipients 2 en matière plastique (schématiquement illustré sur la figure 4).

Plus précisément, en référence aux figures 1 et 4, le dispositif 1 de contrôle comprend :
- un bâti 3 ;
- un réceptacle 4 destiné à recevoir une solution liquide ;
- des moyens de mise sous pression 5 du récipient 2 à contrôler ;
- des moyens de maintien en position 6 du récipient 2 dans le réceptacle 4 ;
- une source lumineuse 7 pour éclairer le récipient 2 à contrôler ;
- des moyens d'acquisition d'images 8.

Le bâti 3 est avantageusement mobile, c'est-à-dire qu'il est monté sur roulettes pour pouvoir être déplacé en différents points d'une usine de fabrication de récipients 2 par exemple.

Le bâti 3 comprend avantageusement un caisson 31 hermétique, à l'intérieur duquel est situé le réceptacle 4.

Ce caisson 31 hermétique peut, le cas échéant, être ventilé par un groupe de ventilation 32 dédié.

Tel qu'illustré sur la figure 1, un tel groupe de ventilation 32 est associé ou rapporté sur le bâti 3 à l'extérieur du caisson 31.

Le caisson 31 intègre un coffre 33 qui définit un plan de travail destiné à recevoir le réceptacle 4.

Le coffre 33 est avantageusement étanche pour que le volume qu'il renferme soit isolé du milieu environnant à l'intérieur du caisson 31.

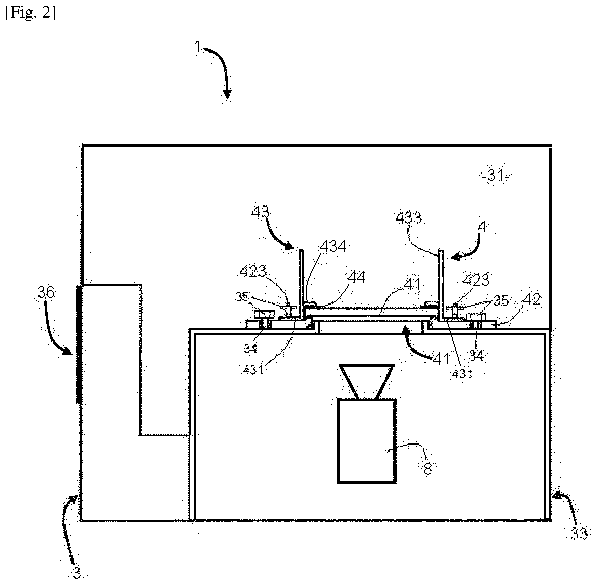

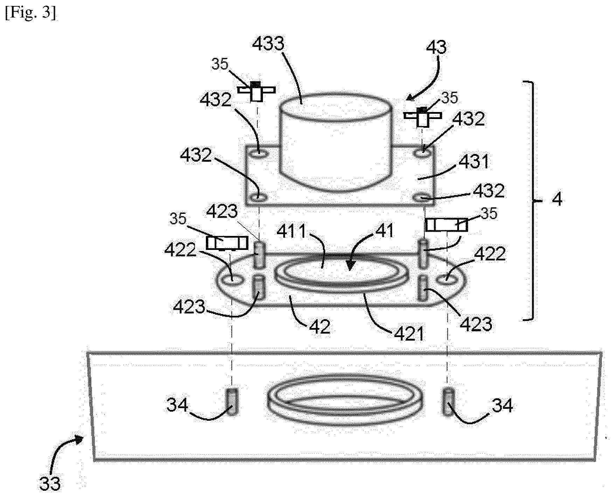

En référence aux figures 2 et 3, le bâti 3 présente également des moyens de fixation 34, 35 pour la fixation amovible du réceptacle 4 sur le bâti 3.

Plus précisément, les moyens de fixation 34, 35 pour la fixation amovible du réceptacle 4 sur le bâti 3 sont portés par le plan de travail du coffre 33.

Selon un mode de réalisation avantageux illustré sur la figure 2, les moyens de fixation 34, 35 comprennent au moins deux tiges filetées 34 et des écrous 35 destinés à venir en prise hélicoïdale avec les tiges filetées 34. Les écrous 35 peuvent être des écrous hexagonaux classiques, c'est-à-dire manipulables par un outil dédié pour leur appliquer un couple de serrage souhaité, ou du type à oreilles permettant à un opérateur d'appliquer le couple de serrage souhaité à la main.

Tel qu'illustré sur les figures 2 et 3, les tiges filetées 34 font saillie du plan de travail du coffre 33 et permettent de fixer le réceptacle 4 comme décrit ci-après.

En outre, le bâti 3 comprend une trappe de visite 36 permettant à un opérateur d'avoir accès à l'intérieur du caisson 31 pour réaliser des opérations de maintenance ou accéder aux moyens d'acquisition d'images 8 logés dans le caisson 31.

La trappe de visite 36 permet également le passage de câbles d'alimentation en énergie des moyens d'acquisition d'images 8 et/ou des moyens de mise sous pression 5 du récipient 2.

En référence aux figures 2 et 3, le réceptacle 4 est formé de plusieurs éléments et comprend avantageusement un fond 41 transparent.

Le fond 41 transparent se présente plus particulièrement sous la forme d'une lentille offrant un grossissement d'un fond du récipient 2 situé à l'intérieur du réceptacle 4.

Ce grossissement a pour but d'aider à la détection de l'apparition de fissures ou la détection d'une explosion du récipient 2 lors du contrôle.

De manière plus précise, et tel qu'illustré sur la figure 3, le réceptacle 4 comprend :
- un socle 42 destiné à être fixé de manière amovible au bâti 3, et plus particulièrement au plan de travail du coffre 33, via les moyens de fixation 34, 35 ;
- une paroi périphérique 43 fixée de manière amovible sur le socle 42 ;
- un disque 411 transparent formant la lentille, c'est-à-dire le fond 41 du réceptacle.

Le socle 42 se présente avantageusement sous la forme d'une plaque présentant une ouverture 421 en son centre et des trous 422 de réception des tiges filetées 34 solidaires du plan de travail.

De plus, le socle 42 présente des axes filetés 423, ici au nombre de quatre, pour la fixation de la paroi périphérique 43, comme expliqué ci-après, les axes filetés 423 formant des premiers organes de fixation. Un nombre différent d'axes filetés 423 pourrait être employé.

En référence à la figure 2 et à la figure 3, la paroi périphérique 43 comprend une embase 431 plane pourvue de perçages 432, de laquelle fait saillie un cylindre 433 formant la paroi latérale du réceptacle 4. Les perçages forment alors des deuxièmes organes de fixation destinés à coopérer avec les premiers organes de fixation comme expliqué ci-après.

La figure 3, qui représente une vue schématique éclatée du réceptacle montre les éléments qui, assemblés entre eux, forment ce réceptacle. Afin de ne pas surcharger la figure, seulement deux des écrous 35 de fixation des axes filetés 423 ont été représentés.

A l'intérieur du cylindre 433, la paroi périphérique 43 présente un anneau 434 fixe destiné à former une butée de réception du disque 411 transparent comme expliqué ci-après.

Différents disques 411 transparents peuvent notamment être utilisés, chaque disque 411 transparent présentant alors un pouvoir grossissant différent des autres disques 411 transparents.

Le montage du réceptacle 4 sur le plan de travail, c'est-à-dire sur le bâti 3, est notamment réalisé comme suit.

Tout d'abord, le socle 42 est positionné sur le plan de travail. Lorsque le socle 42 est positionné, les tiges filetées 34 traversent les trous 422 du socle 42 et ce dernier peut être solidarisé au bâti 3 par serrage au moyen des écrous 35. Dans l'exemple illustré, les écrous 35 de fixation du socle au plan de travail sont des écrous classiques, tels que des écrous hexagonaux.

Ensuite, le disque 411 transparent est positionné en recouvrement de l'ouverture 421 du socle 42.

Suite au positionnement du disque 411 transparent, un joint 44, par exemple de type torique, est positionné sur le disque 411 transparent.

La paroi périphérique 43 est alors positionnée par-dessus le disque 411 transparent de sorte que le joint 44 soit intercalé entre le disque 411 transparent et l'anneau 434 fixe de la paroi périphérique 43.

Lorsque la paroi périphérique 43 est correctement positionnée, les axes filetés 423 du socle 42 traversent les perçages 432 de l'embase 431 de la paroi périphérique 43.

La fixation définitive de la paroi périphérique 43, et donc le montage complet du réceptacle 4, est alors assurée par serrage d'écrous 35 sur les axes filetés 423 qui provoquent le plaquage de l'embase 431 de la paroi périphérique 43 sur le socle 42. Dans l'exemple illustré, les écrous 35 de fixation du réceptacle au socle sont des écrous paillon ou à oreille. En outre, la fixation définitive de la paroi périphérique 43 provoque un écrasement du joint 44 entre le disque 411 transparent et l'anneau 434 fixe de la paroi périphérique 43, ce qui assure un blocage exempt de vibrations.

Optionnellement, préalablement au positionnement du disque 411 transparent, un deuxième joint de type torique peut être positionné sur le socle 42, ce joint cerclant alors l'ouverture. Le deuxième joint, qui permet d'accroître l'étanchéité du réceptacle est alors également écrasé lors de la fixation définitive de la paroi périphérique 43.

Il est entendu que l'expression « fixation définitive de la paroi périphérique 43 » n'enlève pas le caractère amovible du réceptacle 4 puisque la fixation est assurée par des moyens de fixation amovible dont notamment les tiges filetées 34, les axes filetés 423, et des écrous 35.

Les moyens d'acquisition d'images 8 prennent, de préférence, la forme d'une caméra de type à haute vitesse.

Une caméra de type à haute vitesse permet notamment de capter de nombreuses images à la seconde pour suivre de manière très précise l'évolution du récipient 2 durant son contrôle.

La caméra est solidarisée au bâti 3 par des moyens ad hoc et capte des images du fond du récipient 2 pour examiner son évolution lors du contrôle, tel qu'expliqué ci-après.

Plus précisément, les moyens d'acquisition d'images 8 sont positionnés à l'intérieur du coffre 33 pour être protégés.

Les moyens de mise sous pression 5 sont solidarisés au bâti 3 au-dessus du réceptacle 4 et forment également, par leur composition, les moyens de maintien en position 6 du récipient 2 dans le réceptacle 4.

A titre d'exemple, les moyens de mise sous pression 5 du récipient 2 comprennent une tubulure d'arrivée d'air rigide qui, lorsqu'elle est positionnée au-dessus du réceptacle 4, permet, par sa seule rigidité, de maintenir en position le récipient 2 dans le réceptacle 4.

Le cas échéant, les moyens de mise sous pression 5 peuvent être complétés de moyens de serrage pour maintenir en position le récipient 2 lors de son contrôle. En effet, lors que le récipient 2 est pressurisé, il a tendance à ressortir de la solution contenue dans le réceptacle 4 et dans laquelle il est plongé. Les moyens de serrage permettent donc de contrer cette tendance du récipient 2 à ressortir de la solution.

La solution destinée à être reçue dans le réceptacle 4 est un mélange contenant notamment de l'eau et de la soude.

Préférentiellement, le pourcentage de soude dans la solution est compris entre 0,15 % et 0,25 % en volume.

Plus avantageusement encore, le pourcentage de soude est égal à 0,20 % de la solution en volume.

La soude permet de simuler des frottements ou des agressions du récipient 2 lors de son utilisation ou lors de sa fabrication lorsque celui-ci glisse entre plusieurs postes de traitement sur des moyens de convoyage.

Plus précisément, la soude agit chimiquement pour dégrader la matière plastique constitutive du récipient 2 et simuler les agressions extérieures, notamment les frottements ou les attaques chimiques des lubrifiants.

Le fond du récipient 2 au moins est donc plongé dans la solution contenue dans le réceptacle 4, de façon à être visible par les moyens d'acquisition d'image 8.

Pour permettre une bonne acquisition d'images, la source lumineuse 7 est positionnée à l'opposé du réceptacle 4 au-dessus du récipient 2.

Avantageusement, la source lumineuse 7 émet une lumière blanche à une température comprise entre 3000 degrés Kelvin et 4000 degrés Kelvin, cela pour permettre une bonne acquisition des images.

Préférentiellement, la source lumineuse 7 émet une lumière blanche à 3500 degrés Kelvin.

La source lumineuse 7 permet de détecter facilement le récipient 2 dans la solution puisque la présence de soude trouble la vision du fond du récipient 2 pour les moyens d'acquisition d'image 8.

Ainsi les rayons lumineux émis par la source lumineuse 7 se propagent dans la matière plastique du récipient 2 et permettent de rendre le récipient 2 visible dans la solution.

Pour améliorer encore la captation d'images par les moyens d'acquisition d'images et en référence à la figure 4, le dispositif 1 de contrôle comprend au moins un écran polariseur 9 intercalé entre la source lumineuse 7 et les moyens d'acquisition d'images 8.

Plus précisément, le dispositif 1 de contrôle comprend deux écrans polariseurs 9 intercalés entre la source lumineuse 7 et les moyens d'acquisition d'images 8, chacun de part et d'autre du réceptacle 4.

de manière encore plus précise, l'un des écrans polariseurs 9 est intercalé entre la source lumineuse 7 et le récipient 2 à contrôler, l'autre écran polariseur 9 étant intercalé entre le réceptacle 4 et les moyens d'acquisition d'images 8.

Les écrans polariseurs 9 permettent de filtrer le rayonnement lumineux émis par la source lumineuse 7 afin de laisser passer ledit rayonnement selon une seule direction prédéterminée.

Ainsi, les troubles liés à la rencontre entre les rayons lumineux et le récipient 2 sont atténués, voire supprimés.

Il en va de même de la réverbération des rayons lumineux lors de leur rencontre avec la solution. En effet, lors de leur rencontre avec la solution, les rayons lumineux peuvent perturber la qualité des images acquises par les moyens d'acquisition. Les écrans polariseurs 9 permettent alors de filtrer ces rayons lumineux pour ne laisser passer que ceux permettant d'obtenir des images de bonne qualité.

En référence à la figure 1, le dispositif 1 de contrôle comprend également une unité informatique 10 permettant à un opérateur réalisant le contrôle des récipients 2 de suivre en temps réel l'évolution du contrôle.

Plus précisément, l'unité informatique 10 est paramétrée pour exécuter un traitement des images provenant des moyens d'acquisition d'images 8.

Cette unité informatique 10 comprend notamment un écran 101 permettant de suivre de manière directe ou de manière pilotée, c'est-à-dire selon la volonté de l'opérateur, les images acquises par les moyens d'acquisition d'images 8.

Le contrôle d'un récipient 2 en matière plastique se fait selon un procédé comprenant des étapes consistant à :
- remplir le réceptacle 4 d'une solution contenant de la soude ;
- immerger au moins partiellement le récipient 2 à contrôler dans ladite solution ;
- raccorder le récipient 2 aux moyens de mise sous pression 5 ;
- pressuriser le récipient 2.

Lors de la mise en oeuvre de ce procédé, une étape supplémentaire et continue d'acquisition d'images au moins du fond du récipient est réalisée.

L'acquisition d'images peut être initiée soit concomitamment à la mise sous pression du récipient 2, soit lorsque le récipient 2 atteint une certaine pression.

L'acquisition d'images permet de détecter l'apparition de fissures et/ou l'explosion du récipient 2 lors de sa mise sous pression.

Le procédé prévoit également une étape d'enregistrement et d'interprétation des fissurations ainsi que de leur évolution, c'est-à-dire de leur nombre, leur taille et leur sens de propagation. Ces interprétations peuvent alors être comparées à d'autres interprétations pour, par exemple, identifier une récurrence dans l'apparition des fissures et leur évolution sur plusieurs récipients.

Grâce au procédé selon l'invention et au dispositif 1 de contrôle selon l'invention, l'opérateur peut suivre l'apparition de fissures ou l'explosion du récipient 2, notamment de son fond, lors de sa mise sous pression.

Plus précisément, l'opérateur peut déterminer à quel instant les fissurations ou l'explosion du récipient 2 se sont produits, et dans le cas de fissurations, déterminer le sens de la propagation de ces dernières.

L'opérateur peut notamment déterminer le nombre de fissures et effectuer une association de ce nombre avec les valeurs finales de temps de résistance avant explosion. Il est ainsi possible d'identifier de manière plus fiable les causes possibles d'explosion des récipients.

Cela permet, dans une étape de rétro-engineering, de pouvoir contrôler, renforcer ou modifier le fond ou la forme des récipients 2 afin de leur permettre de résister aux pressions, et de limiter l'apparition de fissures ou l'explosion des récipients 2 lors de leur remplissage ou de leur mise en commerce.

En outre, il est également possible d'agir sur la mise sous contrôle de tous les facteurs importants dans la fabrication des récipients, en partant de la matière utilisée pour fabriquer les préformes jusqu'aux conditions de stockage et de distribution des récipients remplis et bouchés.

Selon un mode de réalisation non illustré sur les figures, le dispositif 1 de contrôle peut intégrer une pluralité de caissons 31 pour pouvoir réaliser le contrôle simultané de plusieurs récipients 2.

Bien entendu, chaque caisson 31 intègre alors un coffre 33 dans lequel sont logés des moyens d'acquisition d'images 8 pour le contrôle des récipients 2.

Le dispositif et le procédé selon l'invention permettent notamment de pouvoir ajouter des éléments d'analyse plus poussés que les seuls facteurs « temps avant explosion » ou « présence d'un fissure trop importante », qui sont uniquement disponibles avec les méthodes de test selon l'art antérieur.

Par exemple, l'instant d'apparition des fissures, leur sens de propagation, et l'instant auquel une fissure a été la source de l'explosion peuvent être connus et interprétés.

En effet, avec les méthodes de l'art antérieur, analyser et comprendre les phénomènes après explosion d'un fond récipient est très compliqué au vu des éléments restant en possession de l'opérateur, c'est-à-dire un récipient présentant un fond éventré.

Le dispositif et le procédé selon l'invention ont notamment permis de constater que, dans certains cas, les premières fissures apparaissaient juste après la pressurisation du récipient, avant même que la soude n'ait été introduite dans la solution.

De telles constatations permettent d'affirmer que l'explosion finale du récipient n'est pas due aux contraintes mécaniques liées à la présence de soude, mais uniquement à une faiblesse mécanique du récipient qui peut, par exemple, être uniquement due à un mauvais étirage de la matière du fond lors du soufflage ou de l'étirage-soufflage du récipient.

Ainsi il est possible de mieux analyser et identifier les causes de rupture de fonds de récipients.

## Revendications

1. Dispositif (1) de contrôle de récipients (2) en matière plastique comprenant :
- un réceptacle (4) destiné à recevoir une solution liquide contenant de la soude, dans lequel peut être au moins partiellement immergé un récipient (2) ;
- des moyens de mise sous pression (5) du récipient (2),
ledit réceptacle (4) présentant un fond (41) transparent et en ce que le dispositif (1) de contrôle comprend des moyens d'acquisition d'images (8), ces moyens d'acquisition étant positionnés sous le réceptacle (4) afin d'enregistrer une succession d'images du récipient (2) lors de sa mise sous pression, **caractérisé en ce que** le dispositif (1) de contrôle comprend également :
- une source lumineuse (7) disposée au-dessus du réceptacle (4) et éclairant en direction des moyens d'acquisition d'images (8),
- au moins un écran polariseur (9) intercalé entre la source lumineuse (7) et les moyens d'acquisition d'images (8).

2. Dispositif (1) de contrôle selon la revendication précédente, **caractérisé en ce qu'**il comprend des moyens de maintien en position (6) d'un récipient (2) dans le réceptacle (4).

3. Dispositif (1) de contrôle selon l'une quelconque des revendications précédentes, **caractérisé en ce que** le fond (41) transparent du réceptacle (4) se présente sous la forme d'une lentille.

4. Dispositif (1) de contrôle selon la revendication précédente, **caractérisé en ce qu'**il comprend un bâti (3) et des moyens de fixation (34, 35) du réceptacle (4) sur le bâti (3).

5. Dispositif (1) de contrôle selon la revendication précédente, **caractérisé en ce que** le réceptacle (4) comprend :
- un socle (42) fixé de manière amovible au bâti (3) via les moyens de fixation (34, 35), le socle (42) portant des premiers organes de fixation ;
- une paroi périphérique (43) fixée de manière amovible sur le socle (42), la paroi périphérique (43) portant des deuxièmes organes de fixation coopérant avec les premiers organes de fixation ;
- un disque (411) transparent formant le fond (41) transparent du réceptacle (4), monté de manière amovible entre le socle (42) et la paroi périphérique (43).

6. Dispositif (1) de contrôle selon l'une quelconque des revendications 1 à 5 , **caractérisé en ce que** la source lumineuse (7) émet une lumière blanche à une température comprise entre 3000° Kelvin et 4000° Kelvin.

7. Dispositif (1) de contrôle selon l'une quelconque des revendications 1 à 6 , **caractérisé en ce qu'**il comprend deux écrans polariseurs (9), intercalés entre la source lumineuse (7) et les moyens d'acquisition d'images (8), chacun de part et d'autre du réceptacle (4).

8. Dispositif (1) de contrôle selon l'une quelconque des revendications précédentes, **caractérisé en ce que** les moyens d'acquisition d'images (8) comprennent une caméra de type à haute vitesse.

9. Dispositif (1) de contrôle selon la revendication précédente, **caractérisé en ce qu'**il comprend une unité informatique (10) paramétrée pour exécuter un traitement des images provenant des moyens d'acquisition d'images (8).

10. Procédé de contrôle d'un récipient (2) en matière plastique au moyen d'un dispositif (1) de contrôle comprenant :
- un réceptacle (4) présentant un fond (41) transparent ;
- des moyens de mise sous pression (5) du récipient (2),
- des moyens d'acquisition d'images (8) positionnés sous le réceptacle (4) ;
- une source lumineuse (7) disposée au-dessus du réceptacle (4) et éclairant en direction des moyens d'acquisition d'images (8), et
- au moins un écran polariseur (9) intercalé entre la source lumineuse (7) et les moyens d'acquisition d'images (8),
le procédé comprenant les étapes consistant à :
- remplir un réceptacle (4) d'une solution contenant de la soude, le réceptacle (4) présentant un fond (41) transparent ;
- immerger au moins partiellement un récipient (2) à contrôler dans ladite solution ;
- pressuriser le récipient (2) ;
**caractérisé en ce que** le procédé comprend, simultanément à la pressurisation du récipient (2), et pendant toute la durée du contrôle, une étape d'acquisition d'images au moins d'un fond du récipient (2).

11. Procédé de contrôle selon la revendication précédente, **caractérisé en ce que** ladite solution comprend un pourcentage de soude compris entre 0.15% et 0.60% en volume.

## Patentansprüche

1. Vorrichtung (1) zum Prüfen von Behältern (2) aus Kunststoff, umfassend:
- ein Behältnis (4), das dazu bestimmt ist, eine Soda enthaltende flüssige Lösung aufzunehmen, und in das ein Behälter (2) mindestens teilweise eingetaucht werden kann;
- Mittel zur Druckbeaufschlagung (5) des Behälters (2), wobei das Behältnis (4) einen transparenten Boden (41) aufweist, und wobei die Vorrichtung (1) zum Prüfen Bilderfassungsmittel (8) umfasst, wobei diese Erfassungsmittel unter dem Behältnis (4) positioniert sind, um eine Folge von Bildern des Behälters (2) bei seiner Druckbeaufschlagung aufzunehmen,
**dadurch gekennzeichnet, dass** die Vorrichtung (1) zum Prüfen auch umfasst:
- eine Lichtquelle (7), die über dem Behältnis (4) angeordnet ist und in Richtung der Bilderfassungsmittel (8) leuchtet,
- mindestens einen polarisierenden Schirm (9), der zwischen die Lichtquelle (7) und die Bilderfassungsmittel (8) gesetzt ist.

2. Vorrichtung (1) zum Prüfen nach dem vorhergehenden Anspruch, **dadurch gekennzeichnet, dass** sie Mittel zur Positionshaltung (6) eines Behälters (2) in dem Behältnis (4) umfasst.

3. Vorrichtung (1) zum Prüfen nach einem der vorhergehenden Ansprüche, **dadurch gekennzeichnet, dass** der transparente Boden (41) des Behältnisses (4) in Form einer Linse vorliegt.

4. Vorrichtung (1) zum Prüfen nach dem vorhergehenden Anspruch, **dadurch gekennzeichnet, dass** sie ein Gestell (3) und Fixierungsmittel (34, 35) zum Fixieren des Behältnisses (4) an dem Gestell (3) umfasst.

5. Vorrichtung (1) zum Prüfen nach dem vorhergehenden Anspruch, **dadurch gekennzeichnet, dass** das Behältnis (4) umfasst:
- einen Sockel (42) der an dem Gestell (3) über die Fixierungsmittel (34, 35) lösbar fixiert ist, wobei der Sockel (42) erste Fixierungselemente trägt;
- eine Umfangswand (43), die auf dem Sockel (42) lösbar fixiert ist, wobei die Umfangswand (43) zweite Fixierungselemente trägt, die mit den ersten Fixierungselementen zusammenwirken;
- eine transparente Scheibe (411), die den transparenten Boden (41) des Behältnisses (4) bildet und zwischen dem Sockel (42) und der Umfangswand (43) lösbar montiert ist.

6. Vorrichtung (1) zum Prüfen nach einem der Ansprüche 1 bis 5, **dadurch gekennzeichnet, dass** die Lichtquelle (7) ein weißes Licht mit einer Temperatur zwischen 3000° Kelvin und 4000° Kelvin aussendet.

7. Vorrichtung (1) zum Prüfen nach einem der Ansprüche 1 bis 6, **dadurch gekennzeichnet, dass** sie zwei polarisierende Schirme (9) umfasst, die zwischen die Lichtquelle (7) und die Bilderfassungsmittel (8) gesetzt sind, jeweils beidseits des Behältnisses (4).

8. Vorrichtung (1) zum Prüfen nach einem der vorhergehenden Ansprüche, **dadurch gekennzeichnet, dass** die Bilderfassungsmittel (8) eine Hochgeschwindigkeitskamera umfassen.

9. Vorrichtung (1) zum Prüfen nach dem vorhergehenden Anspruch, **dadurch gekennzeichnet, dass** sie eine Computereinheit (10) umfasst, die dazu parametriert ist, eine Verarbeitung der von den Bilderfassungsmitteln (8) kommenden Bilder durchzuführen.

10. Verfahren zum Prüfen eines Behälters (2) aus Kunststoff mittels einer Vorrichtung (1) zum Prüfen, umfassend:
- ein Behältnis (4), das einen transparenten Boden (41) aufweist;
- Mittel zur Druckbeaufschlagung (5) des Behälters (2),
- Bilderfassungsmittel (8), die unter dem Behältnis (4) positioniert sind;
- eine Lichtquelle (7), die über dem Behältnis (4) angeordnet ist und in Richtung der Bilderfassungsmittel (8) leuchtet, und
- mindestens einen polarisierenden Schirm (9), der zwischen die Lichtquelle (7) und die Bilderfassungsmittel (8) gesetzt ist, wobei das Verfahren die in Folgendem bestehenden Schritte umfasst:
- Füllen eines Behältnisses (4) mit einer Soda enthaltenden Lösung, wobei das Behältnis (4) einen transparenten Boden (41) aufweist;
- mindestens teilweises Eintauchen eines zu prüfenden Behälters (2) in die Lösung;
- Unterdrucksetzen des Behälters (2);
**dadurch gekennzeichnet, dass** das Verfahren, gleichzeitig mit dem Unterdrucksetzen des Behälters (2) und während der gesamten Dauer des Prüfens, einen Schritt des Erfassens von Bildern mindestens eines Bodens des Behälters (2) umfasst.

11. Verfahren zum Prüfen nach dem vorhergehenden Anspruch, **dadurch gekennzeichnet, dass** die Lösung einen prozentualen Sodaanteil zwischen 0,15 und 0,60 Vol.-% umfasst.

## Claims

1. Device (1) for monitoring containers (2) made of plastic material comprising:
- a receptacle (4) intended to receive a liquid solution containing soda, in which a container (2) can be at least partially immersed;
- means for pressurising (5) the container (2),
said receptacle (4) having a transparent bottom (41) and wherein
the monitoring device (1) comprises image acquisition means (8), these acquisition means being positioned under the receptacle (4) in order to record a succession of images of the container (2) when it is pressurised, **characterised in that** the monitoring device (1) also comprises:
- a light source (7) disposed above the receptacle (4) and illuminating towards the image acquisition means (8),
- at least one polarising screen (9) inserted between the light source (7) and the image acquisition means (8) .

2. Monitoring device (1) according to the preceding claim, **characterised in that** it comprises means (6) for holding a container (2) in position in the receptacle (4) .

3. Monitoring device (1) according to either one of the preceding claims, **characterised in that** the transparent bottom (41) of the receptacle (4) takes the form of a lens.

4. Monitoring device (1) according to the preceding claim, **characterised in that** it comprises a rack (3) and means (34, 35) for fixing the receptacle (4) on the rack (3) .

5. Monitoring device (1) according to the preceding claim, **characterised in that** the receptacle (4) comprises:
- a baseplate (42) fixed removably to the rack (3) via the fixing means (34, 35), the baseplate (42) bearing first fixing members;
- a peripheral wall (43) fixed removably to the baseplate (42), the peripheral wall (43) bearing second fixing members cooperating with the first fixing members;
- a transparent disc (411) forming the transparent bottom (41) of the receptacle (4), mounted removably between the baseplate (42) and the peripheral wall (43).

6. Monitoring device (1) according to any one of Claims 1 to 5, **characterised in that** the light source (7) emits a white light at a temperature lying between 3000° Kelvin and 4000° Kelvin.

7. Monitoring device (1) according to any one of Claims 1 to 6, **characterised in that** it comprises two polarising screens (9), inserted between the light source (7) and the image acquisition means (8), each on either side of the receptacle (4).

8. Monitoring device (1) according to any one of the preceding claims, **characterised in that** the image acquisition means (8) comprise a camera of high-speed type.

9. Monitoring device (1) according to the preceding claim, **characterised in that** it comprises a computing unit (10) parameterised to execute a processing of the images originating from the image acquisition means (8).

10. Method for monitoring a container (2) made of plastic material by means of a monitoring device (1) comprising:
- a receptacle (4) having a transparent bottom (41);
- means (5) for pressurising the container (2),
- image acquisition means (8) positioned under the receptacle (4);
- a light source (7) disposed above the receptacle (4) and illuminating towards the image acquisition means (8), and
- at least one polarising screen (9) inserted between the light source (7) and the image acquisition means (8), the method comprising the steps of:
- filling a receptacle (4) with a solution containing soda, the receptacle (4) having a transparent bottom (41) ;
- at least partially immersing a container (2) to be monitored in said solution;
- pressurising the container (2);
**characterised in that** the method comprises, concurrently with the pressurising of the container (2), and throughout the monitoring time, a step of acquisition of images at least of a bottom of the container (2).

11. Monitoring method according to the preceding claim, **characterised in that** said solution comprises a percentage of soda lying between 0.15% and 0.60% by volume.
